# EUROPEAN PATENT APPLICATION

(11) **EP 1 544 287 A1**
(43) Date of publication of application: **22.06.2005**
(21) Application number: 03792772.0
(22) Date of filing: 21.08.2003
(51) Int. Cl.: C12M 1/34, C12Q 1/04, G01N 35/08, G01N 37/00

(54) **APPARATUS FOR CELL REACTION EXAMINATION AND METHOD OF CELL REACTION EXAMINATION**

(30) Priority: 23.08.2002 JP 2002242932
(71) Applicant: JSR Corporation, Tokyo 104-0045 (JP)
(72) Inventor: YASUDA, Kenji c/o JSR Corporation, Tokyo 104-0045 (JP); YAMAKOSHI, Tsuyoshi c/o JSR Corporation, Tokyo 104-0045 (JP); AKEMA, Hiroshi c/o JSR Corporation, Tokyo 104-0045 (JP)
(74) Representative: Vollnhals, Aurel, Dipl.-Ing.
(86) International application number: PCT/JP2003/010574
(87) International publication number: WO 2004/018614

(57) **Abstract**

Disclosed herein are an inspection apparatus for cell reaction by a device for liquid processor, which can set a fluid running route to a cell reaction site required according to the kind of an inspection of a cell reaction to be conducted with a great degree of freedom, and an inspection method of a cell reaction using the inspection apparatus for cell reaction.

The inspection apparatus for cell reaction is composed of a device for liquid processor comprising a base material, micro conduits formed in the base material, micro spaces, valves and a valve control mechanism, and is used in an inspection of a cell reaction, in which a liquid medium is fed through a micro conduit linked to a micro space, in which cells are placed, and a test liquid containing a cell stimulator is fed to inspect a cell reaction caused by the test liquid. The inspection method of the cell reaction utilizes the inspection apparatus having the construction described above.

## Description

### TECHNICAL FIELD

The present invention relates to an inspection apparatus for cell reaction for conducting an inspection of a cell reaction for detecting the results of the cell reaction caused by contact of cells with a cell stimulator, and an inspection method of a cell reaction for conducting an inspection of the cell reaction utilizing the inspection apparatus for cell reaction.

### BACKGROUND ART

At present, it is conducted to make various evaluations such as effects of cell stimulators, including various physiologically activating substances, for a specific kind of cells and resistance of the cells against such a cell stimulator by conducting an inspection of a cell reaction that a test liquid containing the cell stimulator is fed to living cells to cause a cell reaction derived by contact of the cells with the cell stimulator, thereby detecting the results as to the cell reaction, or detecting that no cell reaction is derived by the cell stimulator.

In general, such an inspection of the cell reaction as described above is conducted by feeding a test liquid containing various cell stimulators to cells inoculated in a medium added to, for example, a plastic petri dish by, for example, addition. After, for example, a cell reaction is caused by the cells as a result, the test liquid is recovered to analyze the test liquid, the cells are directly observed using a fluorochrome-labeling probe, or the cells used in the reaction are recovered and analyzed, thereby detecting the results as to the cell reaction. On the basis of this detected results, various evaluations are made.

However, it is difficult to set various reaction conditions with a great degree of freedom in conventional methods for conducting the inspection of the cell reaction. For example, it is difficult to conduct an expected inspection of a cell reaction under conditions for conducting a stepwise reaction using plural kinds of cell stimulators for single cells or conditions that reactions by plural kinds of cells are combined.

On the other hand, in development of a new medicine, various evaluations as to screening of various kinds of proposed medicinal substances, toxicity, drug resistance, etc. are made by animal tests utilizing, for example, rats. However, various problems are involved in such animal tests. For example, there is a large difference between individual animals used, and it takes time for breeding, keeping and the like. In addition, the animal tests themselves are not preferred from the ethical point of view as to animal preservation.

### DISCLOSURE OF THE INVENTION

The present invention has been made on the basis of the foregoing circumstances and has as its object the provision of an inspection apparatus for cell reaction by a device for liquid processor, which can set a fluid running route to a cell reaction site required according to the kind of an inspection of a cell reaction to be conducted with a great degree of freedom.

Another object of the present invention is to provide an inspection method of a cell reaction utilizing the inspection apparatus for cell reaction.

According to the present invention, there is thus provided an inspection apparatus for cell reaction, which is composed of a device for liquid processor comprising
a plate-shaped base material,
a plurality of first micro conduits extending in a first direction and a plurality of second micro conduits extending in a second direction different from the first direction, which are formed in the base material,
micro spaces formed at respective intersections of the first micro conduits and second micro conduits,
a valve provided in each of the respective micro conduits linked to the micro spaces, for opening and closing the micro conduit, and
a valve control mechanism for controlling the valve between closed and opened states,
wherein the apparatus is used in an inspection of a cell reaction, in which a liquid medium necessary for survival of living cells is fed through one of micro conduits linked to a selected micro space, in which the living cells are placed, and a test liquid containing a cell stimulator is fed through another micro conduit linked to the micro space to inspect a cell reaction caused by the test liquid.

According to the present invention, there is also provided an inspection method of a cell reaction, which comprises using a device for liquid processor comprising
a plate-shaped base material,
a plurality of first micro conduits extending in a first direction and a plurality of second micro conduits extending in a second direction intersecting with the first direction, which are formed in the base material,
micro spaces formed at respective intersections of the first micro conduits and second micro conduits,
a valve provided in each of the respective micro conduits linked to the micro spaces, for opening and closing the micro conduit, and
a valve control mechanism for controlling each of the valves between closed and opened states,
wherein a liquid medium necessary for survival of cells is fed to a selected micro space, in which the cells are placed, through one of micro conduits linked to the micro space, and a test liquid containing a cell stimulator is fed through another micro conduit linked to the micro space, thereby inspecting a cell reaction caused.

In the method described above, it may be preferable that the same kind of cells be placed in a plurality of micro spaces, and different test liquids containing a cell stimulator be fed to the plurality of the micro spaces.

It may also be preferable that different kinds of cells be placed in a plurality of micro spaces, and the same test liquid containing a cell stimulator be fed to the plurality of the micro spaces.

According to the present invention, there is further provided an inspection method of a cell reaction, which comprises using a device for liquid processor comprising
a plate-shaped base material,
a plurality of first micro conduits extending in a first direction and a plurality of second micro conduits extending in a second direction intersecting with the first direction, which are formed in the base material,
micro spaces formed at respective intersections of the first micro conduits and second micro conduits,
a valve provided in each of the respective micro conduits linked to the micro spaces, for opening and closing the micro conduit, and
a valve control mechanism for controlling each of the valves between closed and opened states,
wherein a first test process that a liquid medium necessary for survival of cells is fed to a selected micro space, in which the cells are placed, through one of micro conduits linked to the micro space, and a first test liquid containing a cell stimulator is fed through another micro conduit linked to the micro space, and
a second test process that the opened and closed states of the valves of the micro conduits linked to the micro space are changed over after the first test process, thereby stopping the feed of the first test liquid and feeding a second test liquid different from the first test liquid, containing a cell stimulator through a feeding route different from the feeding route for the first test liquid are conducted, thereby inspecting cell reactions caused by these test processes.

In the above-described method, the first and second test liquids may preferably contain cell stimulators different in kind or concentration from each other. It may also be preferable that the cells placed in the micro space be cells derived from an internal organ or organ of an animal, and the cell stimulators contained in the first and second test liquids be selected from cell growth factors, cell proliferation factors, hormones, nutrients and sera.

In the above-described method, the inspection of the cell reaction may preferably be detection of a productive substance produced by the cells.

According to the present invention, there is still further provided an inspection method of a cell reaction, which comprises using a device for liquid processor comprising
a plate-shaped base material,
a plurality of first micro conduits extending in a first direction and a plurality of second micro conduits extending in a second direction intersecting with the first direction, which are formed in the base material,
micro spaces formed at respective intersections of the first micro conduits and second micro conduits,
a valve provided in each of the respective micro conduits linked to the micro spaces, for opening and closing the micro conduit, and
a valve control mechanism for controlling each of the valves between closed and opened states,
wherein in an inspection of a cell reaction that a liquid medium necessary for survival of cells is fed to a plurality of selected micro spaces, in each of which the cells are placed, through one of micro conduits respectively linked to the plurality of the micro spaces, and a test liquid containing a cell stimulator is fed through another micro conduits respectively linked to the plurality of the micro spaces,
a cell reaction product by the first cells is fed to the second cells.

According to the inspection apparatus for cell reaction of the present invention, reaction conditions can be set for living cells placed in a selected micro space with a great degree of freedom by utilizing a liquid processor that in the device for liquid processor, the opened and closed states of valves related to the micro conduits making up a micro conduit network can be selectively controlled to set a liquid running route with a great degree of freedom.

Accordingly, a plurality of liquid running routes can be formed in the same inspection apparatus for cell reaction, a state that a plurality of inspections of cell reactions can be conducted at the same time can be easily realized, and the identical-ness of reaction conditions in the plurality of the inspections of cell reactions can be achieved with high precision as needed.

In addition, the liquid processor used as the inspection apparatus for cell reaction is constructed as a micro reactor, whereby an expected cell reaction can be conducted under economically advantageous conditions that a required amount of a reagent is extremely small.

According to the inspection method of the cell reaction of the present invention, reaction conditions can be set for living cells placed in a selected micro space with a great degree of freedom by using the above-described inspection apparatus for cell reaction, so that expected reactions in the cells can be easily conducted at a variety of different conditions, and the results by the reactions can be detected with high efficiency.

Since a cell reaction can be conducted on an extremely small scale, the results as to the cell reaction can be obtained in a short period of time.

### BRIEF DESCRIPTION OF THE DRAWINGS

Fig. 1 typically illustrates an example of the construction of a device for liquid processor, which forms an inspection apparatus for cell reaction according to the present invention.
Fig. 2 is a cross sectional view illustrating the specific construction of a valve.
Fig. 3 is a cross sectional view illustrating the specific construction of a micro space at an intersection of a vertical micro conduit and a lateral micro conduit showing a section perpendicular to the lateral micro conduit.
Fig. 4 illustrates a specific example of a liquid processor in an inspection method of a cell reaction according to the present invention.
Fig. 5 illustrates the specific example of the liquid processor in the inspection method of the cell reaction according to the present invention.
Fig. 6 illustrates another specific example of a liquid processor in the inspection method of the cell reaction according to the present invention.
Fig. 7 illustrates a further specific example of a liquid processor in the inspection method of the cell reaction according to the present invention.
Fig. 8 illustrates a still further specific example of a liquid processor in the inspection method of the cell reaction according to the present invention.
Fig. 9 illustrates a specific example that the opened and closed states of a valve have been controlled and changed over in the liquid processor shown in Fig. 8.
Fig. 10 illustrates a still further specific example of a liquid processor in the inspection method of the cell reaction according to the present invention.

### [Description of Characters]

- 10: Device for liquid processor
- 12: Base material
- H1, H2: Lateral micro conduits
- V1, V2: Vertical micro conduits
- H1i, H2i: Openings
- V1o, V2o: Openings
- X1-X4: Micro spaces
- A, B, C: Regions
- a, b, c: Regions
- 20: Spherical space
- 22: One pore
- 24: The other pore
- 22A: Main portion
- 22B: Curved portion
- 23, 25: Openings
- 28: Valve ball
- 30: Magnetizable film
- 31: Micro space
- 32: Upper space
- 33: Lower space
- 34: Film-like cell supporting part
- 35A, 35B: Vertical micro conduits
- 36A, 36B: Lateral micro conduits

### BEST MODE FOR CARRYING OUT THE INVENTION

Embodiments of the present invention will hereinafter be described in detail.

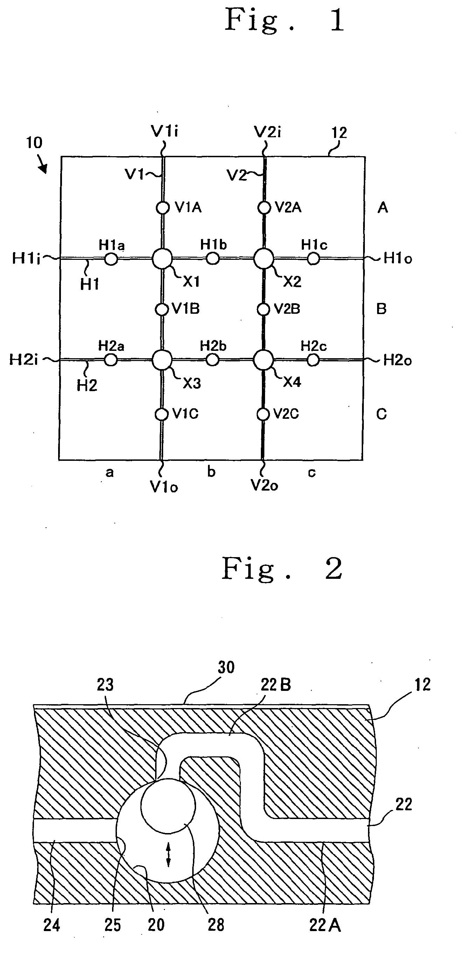

Fig. 1 typically illustrates an example of the construction of a device (hereinafter referred to as "device" merely) for liquid processor, which forms an inspection apparatus for cell reaction according to the present invention.

In the embodiment in Fig. 1, the device 10 is so formed that in a plate-shaped base material 12 in the form of a rectangle as a whole, 2 lateral micro conduits H1 and H2 in the form of a tunnel are formed in a state separated from each other in a vertical direction so as to each extend in a horizontal direction in a plane direction of the base material 12 within the body part of the base material 12 and be opened at the both ends thereof at both left and right side edges of the base material 12, and 2 vertical micro conduits V1 and V2 in the form of a tunnel are formed in a state separated from each other in a lateral direction so as to each extend in a vertical direction in the plane direction and be opened at the both ends thereof at both top and bottom side edges of the base material 12, so that the lateral micro conduits H1, H2 and vertical micro conduits V1, V2 intersect each other at 4 micro spaces X1, X2, X3 and X4 in total to form a micro conduit network by these conduits.

In this figure, reference characters H1i, H2i, V1i and V2i denote openings located at left side edge and upper side edge of the base material 12, and H1o, H2o, V1o and V2o denote openings located at right side edge and lower side edge of the base material 12.

Specifically, the upper lateral micro conduit (hereinafter referred to as "upper lateral conduit") H1 and the left side vertical micro conduit (hereinafter referred to as "left side vertical conduit") V1 intersect at the micro space X1, the upper lateral conduit H1 and the right side vertical micro conduit (hereinafter referred to as "right side vertical conduit") V2 intersect at the micro space X2, the lower lateral micro conduit (hereinafter referred to as "lower lateral conduit") H2 and the left side vertical conduit V1 intersect at the micro space X3, and the lower lateral conduit H2 and the right side vertical conduit V2 intersect at the micro space X4.

A valve is provided in each of 3 conduit portions formed by dividing each of the upper lateral conduit H1, lower lateral conduit H2, left side vertical conduit V1 and right side vertical conduit V2 by the 2 intersections on said conduit, for closing and opening the conduit portion.

In the illustrated embodiment, 3 regions partitioned by the upper lateral conduit H1 and lower lateral conduit H2 and line up vertically are regarded as A, B and C in order from the top, and 3 regions partitioned by the left side vertical conduit V1 and right side vertical conduit V2 and line up laterally are regarded as a, b and c in order from the left. Each valve and conduit portion is identified by writing both characters of a micro conduit and a region, in which each of the valve and conduit portion is located.

For example, a valve in a conduit portion in the left region a of the upper lateral conduit H1 is expressed as "valve H1a".

Accordingly, valves H1a, H1b and H1c are provided in the respective conduit portions of the upper lateral conduit H1, valves H2a, H2b and H2c are provided in the respective conduit portions of the lower lateral conduit H2, valves V1A, V1B and V1C are provided in the respective conduit portions of the left side vertical conduit V1, and valves V2A, V2B and V2C are provided in the respective conduit portions of the right side vertical conduit V2.

Fig. 2 is a cross sectional view illustrating the specific construction of a valve.

In this figure, a spherical space 20 forming a valve chamber and having a relatively large inner diameter is formed in the body part (hatched portion in Fig. 2) of the base material 12, and a conduit portion is formed by one pore 22 and the other pore 24 which are linked to each other by being opened to the spherical space 20.

One pore 22 has a main portion 22A extending along the surface of the base material 12 and a U-shaped curved portion 22B connected to the main portion 22A, and the curved portion 22B communicates with the spherical space 20 through a circular opening 23 at the upper portion of the spherical space 20. A peripheral edge of the opening 23 acts as a valve seat. The other pore 24 extends along the surface of the base material 12 and communicates with a side portion of the spherical space 20 at an opening 25.

Within the spherical space 20 is arranged a valve ball 28 having an outer diameter greater than any opening diameter of the opening 23 related to one pore 22 and the opening 25 related to the other pore 24 and making up a valve particle which will become a valve disk of the valve. The valve ball 28 is composed of a magnetic field-sensitive substance, for example, a ferromagnetic substance such as iron, nickel or cobalt. A magnetizable film 30 for moving the valve ball 28 in a thickness-wise direction of the base material 12 is provided on the whole surface of the base material 12.

When the magnetizable film 30 is magnetized at a portion correspondingly facing to any spherical space 20, the valve ball 28 in the spherical space 20 is pressed against a peripheral edge of the opening 23 related to one pore 22 by attraction force by virtue of an effect of a magnetic field generated at this portion as the result thereof, whereby the opening 23 is closed, and the direct link between said one pore 22 and the spherical space 20 is shut off, so that passage of a liquid through this conduit portion is prohibited. In other words, the magnetizable film 30 has an effect as a valve control mechanism to the valve, and the valve that has been in an opened state is set to a closed state by driving this valve control mechanism.

As the magnetizable film 30, may be used that according to a card writer used in process of a magnetic card or the memory system of a hard disk drive in a computer.

According to the construction described above, the valve set to the closed state once retains the closed state as it is until the portion is demagnetized. On the other hand, the valve can be set to an opened state by demagnetizing the magnetized portion of the magnetizable film, so that setting conditions of a liquid running route formed once can be reset. As a result, the device 10 itself can be used repeatedly.

When the device 10 is used on a magnetizing apparatus, opened and closed states of proper valves can be controlled while a micro reaction or the like is conducted in the device 10 that a liquid running route has been set once. As a result, the liquid running route can be freely changed

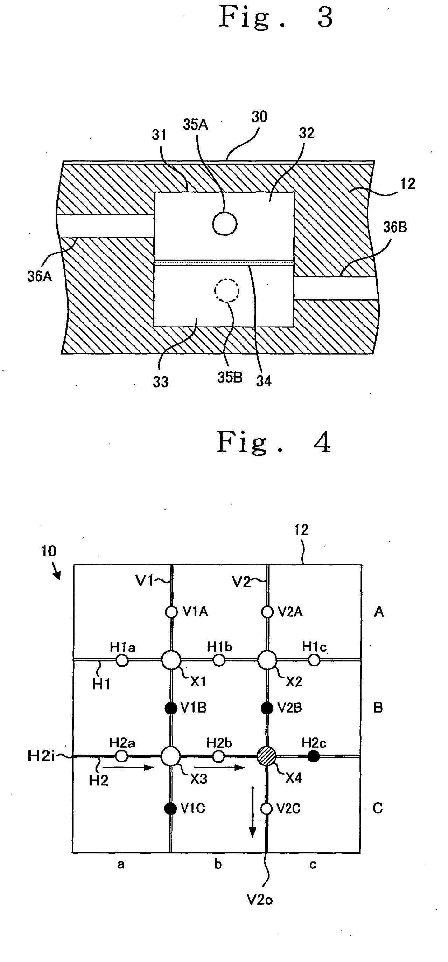

Fig. 3 is a cross sectional view illustrating the specific construction of a micro space at an intersection of a vertical micro conduit and a lateral micro conduit showing a section perpendicular to the lateral micro conduit.

As illustrated in this drawing, the micro space 31 is formed by a space in the form of a cylinder extending in a vertical direction as a whole in the body part of the base material 12. A film-like cell supporting part 34, which supports cells, but allows permeation of liquids, is arranged within the micro space 31 so as to extend in the plane direction, and an upper space 32 and a lower space 33 are formed in a stated divided by the film-like cell supporting part 34. A vertical micro conduit 35A and a lateral micro conduit 36A are opened in the upper space 32 of the micro conduit 31, and a vertical micro conduit 35B and a lateral micro conduit 36B are opened in the lower space 33, whereby a liquid running route is formed by linking the micro conduits with one another.

A part (not illustrated) for preventing outflow of cells composed of, for example, any of various mesh members is provided on each of openings related to the vertical micro conduits 35A, 36B and the lateral micro conduits 36A, 36B opened to the micro space 31 as needed. This can allow flowing of a liquid and prevent cells located within the micro space 31 from flowing out.

In the device 10, is provided a conduit portion opening and closing mechanism having a function that individual valve control mechanisms related to all valves in a device as a target are driven, and is also provided a running route setting apparatus composed of a computer in which information as to the micro conduit network of the device and information as to positions of the valves have been stored.

In the running route setting apparatus, the conduit portion opening and closing mechanism is driven by a command for setting the liquid running route by a proper signal in such a manner that valves related to other conduit portions than conduit portions selected become a closed state, whereby a necessary liquid running route linked up through the specific micro spaces is set in the device, so that the device 10 is provided as a liquid processor and this liquid processor is used as an inspection apparatus for cell reaction.

As a material forming the base material 12, a material not impeding the life state of cells used, for example, glass, a resin or a metal is used. However, the resin is particularly preferably used from the viewpoint of easy production.

As the material forming the base material 12, that having transparency, such as glass or a transparent resin, may preferably be used, whereby cells in the micro spaces may be observed visually.

With respect to the base material 12, conditions such as dimensions and shape can be freely determined. As an example thereof, may be mentioned a square base material having a length of 30 mm, a width of 30 mm and a thickness of 5 mm.

Each of the micro conduits may be any form so far as an ordinary liquid (for example, water) can be passed. The micro conduit is formed into, for example, a circular tunnel having an inner diameter of 30 µm. In this case, a flow rate of the liquid is controlled to, for example, 0.5 µL/min.

In the valve, an inner diameter of the spherical space 20 is, for example, 80 µm, and an outer diameter of the valve ball 28 is, for example, 40 µm.

The micro space 31 may be formed into that having a volume of 0.0008 to 20 µl, for example, that in the form of a cylinder having a height of 100 to 3000 µm, particularly preferably 200 to 2000 µm and a diameter of 100 to 3000µm, particularly preferably 200 to 2000 µm may be preferably used. However, no particular limitation is imposed on the form of the micro space, and it may be formed into size and shape according to an intended cell reaction and may be in the form of, for example, a sphere or rectangle.

In such a device 10, necessary liquids are caused to flow into the micro conduits from proper openings in the outer peripheral edge of the base material 12 by installing a fluid feeding mechanism formed of, for example, a micropump not illustrated.

The device having the above-described construction can be produced by various methods. Specifically, the so-called stereo lithography may preferably be used.

In the inspection apparatus for cell reaction composed of the device 10 of such construction as described above, opened and closed states of proper valves can be controlled to provide a liquid processor, and the inspection method of a cell reaction according to the present invention is conducted in the following manner.

In the inspection method of a cell reaction according to the present invention, living cells are first inoculated on in the film-like cell supporting part in the micro space, and the opened and closed states of the valves in the device 10 making up the inspection apparatus for cell reaction are controlled, thereby forming a liquid running route linked up to the micro space which is a cell reaction site, and in which the cells are placed. A liquid medium is continuously fed to the micro space through the liquid running route, whereby the so-called conditioning is conducted, thereby achieving a state that the cells have been surely attached or fixed to the film-like cell supporting part.

In this embodiment, the micro space, in which the cells should be placed, may be only required to be suitably selected in view of the liquid running route to be formed according to the kind of the cell reaction which is an intended micro reaction.

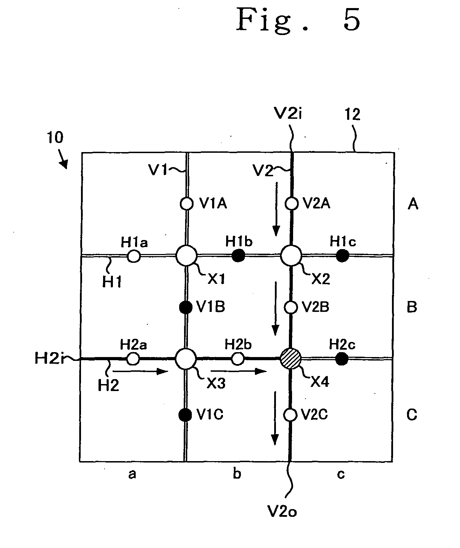

As illustrated in, for example, Fig. 4, the cells are placed in the selected micro space X4 in the device 10 shown in Fig. 1, the valves H2c, V1B, V1C and V2B are set to a closed state, and other valves than these valves are set to an opened state, whereby a state that a liquid running route linked up to a liquid discharge route from the opening H2i formed in the outer peripheral edge of the base material 12 in the conduit portion H2a to the micro space X4 through the conduit portion H2a, the micro space X3 and the conduit portion H2b and from the micro space X4 to the opening V2o in the conduit portion V2C through the conduit portion V2C has been formed is realized, thereby forming a first liquid processor.

In this liquid processor, the liquid medium is caused to flow in from the opening H2i, passed through the liquid running route, fed to the micro space X4 and discharged from the opening V2o, thereby conducting conditioning of the cells placed in the micro space X4.

The conditioning may be conducted only for a specific period of time determined according to the kind of the cells used in the inspection and other conditions, for example, for 12 hours.

After such conditioning as described above is conducted, the opened and closed states of the valves are controlled in the state that the liquid medium has been continuously fed, thereby forming another liquid running route (hereinafter may also be referred to as "test liquid feeding route") than the liquid running route, linked up to the micro space X4, in which the cells have been placed. A test liquid containing a selected kind of cell stimulator at a set concentration is fed to the micro space X4 through this test liquid feeding route, thereby conducting an inspection of a cell reaction.

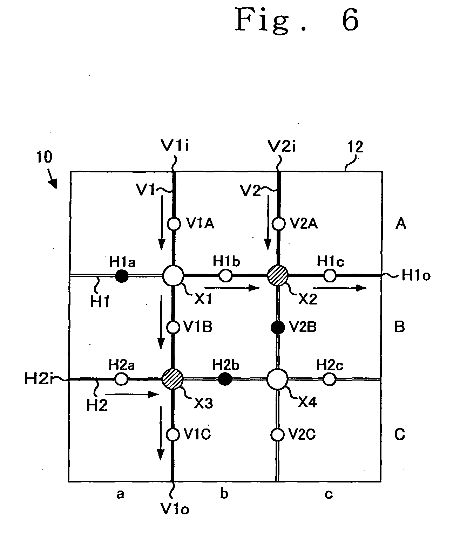

Specifically, in the liquid processor according to the embodiment shown in Fig. 4, as illustrated in Fig. 5, the valve V2B is set to an opened state, the valves H1b and H1c are set to a closed state, and so, as a whole, the valves H1b, H1c, H2c, V1B and V1C are set to a closed state and other valves than these valves are set to an opened state, thereby forming a liquid medium feeding route linked up to the micro space X4 from the opening H2i through the conduit portion H2a, the micro space X3 and the conduit portion H2b, a test liquid feeding route linked up to the micro space X4 from the opening V2i through the conduit portion V2A, the micro space X2 and the conduit portion V2B, and a liquid discharge route linked up to the opening V2o from the micro space X4 through the conduit portion V2C. A state that passage of a liquid through other conduit portions H1a, H1b, H1c, H2c, V1A, V1B and V1C has been prohibited is thus realized, thereby forming a second liquid processor.

In the second processor, the liquid medium is caused to flow in from the opening H2i and fed to the micro space X4, the test liquid containing the cell stimulator is caused to flow in from the opening V2i and fed to the micro space X4, and the liquids are discharged from the micro space X4 to the outside through the liquid discharge route, thereby conducting an inspection of a cell reaction.

Detection of results such as whether a reaction occurs in the cells used in the cell reaction or not, the kind of a reaction caused, or the intensity of the reaction is conducted by proper means, thereby making various evaluations as to the test liquid and cells.

No particular limitation is imposed on the methods for detecting the results of the cell reaction in the inspection of the cell reaction, and the detection can be conducted by various methods according to the object of the inspection of the cell reaction. As examples thereof, may be mentioned a method, in which the cells are samples out of the micro space after completion of the feed of the test liquid to the micro space, and a change of the life state or active state in the cells, the presence of a reaction product or a quantity thereof, or the like is detected, a method, in which a change of the composition in a discharge liquid discharged from the micro space through the liquid discharge route is investigated to detect, for example, a productive substance produced by the cells, and a method, in which a carrier liquid is fed to the micro space though a proper liquid running route, and a change of the composition in the carrier liquid discharged is investigated to detect, for example, a productive substance produced by the cells.

A method of detecting the degree of a cell reaction by comparative evaluation of the intensity of fluorescent luminescence by a fluorochrome-labeled probe before and after the test liquid is fed to the micro space may also be used.

When the carrier liquid is used in the detection of the results of the cell reaction in this embodiment, the composition of the carrier liquid can be determined according to various conditions or the object.

Specifically, the cells used in the inspection of the cell reaction are hepatic parenchymal cells, the quantity of albumin contained in the discharge liquid is detected, whereby an active state in the hepatic parenchymal cells can be inspected.

No particular limitation is imposed on the liquid medium used in the inspection of the cell reaction in this embodiment so far as it can maintain the life state of the cells. However, it may be suitably selected according to the kind of the cells used, the kind of the cell stimulator contained in the test liquid and other various conditions.

As the liquid medium, is used a medium that can retain the life state of the cells and contains no cell stimulator. Examples of liquid media preferably used include Dullbecco's Modified Eagle's medium (DMEM), Mninimal Essential medium (MEM), Ham's F12 medium (F12 medium), Rosewell Park Memorial Institute 1640 medium (RPM 1640), WI, SFM-101, UC medium 102, UC medium 199 and ES containing fetal calf serum (FCS), fetal horse serum (FHS), bovine serum (BS), human serum or the like adjusted in pH value with, for example, carbon dioxide gas.

The quantity of the liquid medium fed to the micro space upon conducting conditioning of the cells in this embodiment may be set according to various conditions, for example, the composition and concentration thereof, the kind and quantity of the cells used, the shape and volume of the micro space, and the like, and is set to, for example, 0.01 to 200 µl/min.

In the inspection of the cell reaction, the quantity of the liquid medium fed to the micro space may be set according to various conditions, for example, the composition and concentration thereof, the kind and quantity of the cells used, the shape and volume of the micro space, and the like. For example, when a DMEM liquid medium containing 10% FCS is fed to 300 rat-derived hepatic parenchymal cells, the quantity is preferably set to, for example, 0.005 to 500 µl/min, particularly 0.02 to 100 µl/min.

The test liquid contains a cell stimulator at a proper concentration. The cell stimulator is suitably selected on the basis of various factors such as the object in the inspection of the cell reaction and is a substance that biochemically stimulates the cells by its contact or non-contact, such as that affecting, for example, the active state or life state of the cells or that deriving the growth or differentiation of the cells. As examples thereof, may be mentioned various nutrients, cell proliferation factors, cell growth factors, hormone substances, medicines, toxic substances and enzymes.

As specific examples of the cell stimulator, may be mentioned inorganic or organic nutrients such as various amino acids and vitamins for the nutrients; hepatic cell growth factors (HGF), epithelial cell growth factors (EGF), fibroblast growth factors (FGF), nerve cell growth factors (NGF), colony forming stimulating factors (CSF), endotherial cell growth factors (ECGF), cell division growth factors (CDF), cartilage-derived cell growth factors (CDGF), macrophage-derived growth factors (MDGF), platelet-derived growth factors (PDGF), vascular endotherial growth factors (VEDGF), transforming growth factors (TGF), interleukin-1, interleukin-2, interleukin-3, interleukin-10, transferring and somatomedin A for the cell proliferation factors or cell growth factors; insulin, erythropoietin, corticoid, dexamethasone, corticosterone, glucagon, testosterone, nicotinamide, follicle stimulating hormones, growth hormones and parathyroid hormones for the hormone substances; and fetal calf sera, fetal horse sera, sheep sera, rabbit sera and human sera for the sera.

As examples of the medicines, may be mentioned novel medical drugs such as anticancer agents and anti-AIDS agents, and besides receptor binding factors such as galactose and RGDS peptide.

No particular limitation is imposed on the kind of the cells used in the inspection of the cell reaction. As specific examples thereof, may be mentioned liver-derived cells such as hepatic parenchymal cells, fibroblasts and star cells; pancreas-derived cells such as PP cells, δ-cells, β-cells (insulin secreting cells) and α-cells (glucagon secreting cells); neural tube cells;, endothelial cells; fibroblasts;, and bone cells. As such cells, may be preferably used, for example, cells derived from an internal organ or organ of an animal.

The quantity of the test liquid fed to the micro space upon conducting the cell reaction is set according to the kind and concentration of the cell stimulator contained, the feed rate of the liquid medium, the kind of the intended inspection, and the like.

In the above-described method, no particular limitation is imposed on a combination of the kind of the liquid medium, the kind and concentration of the cell stimulator to be contained in the test liquid and the kind of the cells used in the inspection of the cell reaction, and the combination may be suitably selected according to the object of the inspection of the cell reaction conducted. For example, the kind and concentration of the cell stimulator may be selected according to the kind of the cells used, or the kind of the cells may be selected according to the kind and concentration of the cell stimulator used. Evaluation as to, for example, the resistance of specific cells to a test liquid containing a specific cell stimulator or the effectiveness by a test liquid containing the specific cell stimulator may be thereby conducted.

As described above, according to the inspection apparatus for cell reaction of the present invention, various inspection methods of cell reactions can be easily conducted according to the type of the intended cell reaction by using the device for liquid processor having the above-described construction.

In other words, in the device for liquid processor, a liquid processor as a micro reactor that a liquid running route suitable for an intended cell reaction has been set by controlling the opened and closed states of the valves is formed, and the liquid processor is utilized as the inspection apparatus for cell reaction, whereby reaction conditions can be set with a great degree of freedom. After all, the intended cell reaction and inspection of the cell reaction can be conducted with ease and certainty.

According to the inspection method of the cell reaction of the present invention, a cell reaction that various test liquids containing a cell stimulator are fed to cells, whose life state is maintained with a preferred mode by continuously feeding a liquid medium, in a suitable manner selected can be easily conducted by using such an inspection apparatus for cell reaction as described above, so that the inspection of the cell reaction can be conducted in a state that various conditions has been set with a great degree of freedom. After all, evaluation as to specific cells or a specific test liquid can be easily and surely made.

In other words, optimum conditions, under which culture and maintenance of parenchymal cells such as cells of an internal organ, for example, hepatic cells, which have heretofore been difficult to be cultured, become feasible, can be clarified. Under the optimum conditions, screening of various kinds of proposed medicinal substances, toxicity tests of various novel compounds can be suitably conducted with ease by changing over the opened and closed states of valves to change the running route used in the addition of the test liquid.

Since the inspection of the cell reaction can be conducted on an extremely small scale by constructing the inspection apparatus for cell reaction as a micro reactor, the cell reaction can be conducted in a short period of time. Accordingly, the results as to the inspection of the cell reaction can be obtained with high efficiency.

### <Simultaneously Progressive Example (1) of Multiple Reactions>

This embodiment is an example that the same kind of cells are placed in a plurality of micro spaces, and different kinds of test liquids are respectively fed to the micro spaces to conduct inspections of cell reactions.

Fig. 6 illustrates another specific example of a liquid processor in the inspection method of the cell reaction according to the present invention.

More specifically, in the device 10, the same kind of cells are placed in the micro spaces X2 and X3, conditioning of the cells is conducted by a suitable mode, and the opened and closed states of the valves are then controlled, thereby providing a liquid processor in which the valves H1a, H2b and V2B are set to a closed state, and other valves than these valves are set to an opened state as illustrated in Fig. 6.

In this liquid processor, is realized a state that a first liquid medium feeding route linked up to the micro space X2 from the opening V1i through the conduit portion V1A, the micro space X1 and the conduit portion H1b, a second liquid medium feeding route branched at the micro space X1 from this first liquid medium feeding route and linked up to the micro space X3 through the conduit portion V1B, a first test liquid feeding route linked up to the micro space X2 from the opening V2i through the conduit portion V2A, a second test liquid feeding route linked up to the micro space X3 from the opening H2i through the conduit portion H2a, a first liquid discharge route linked up to the opening H1o from the micro space X2 through the conduit portion H1c, and a second liquid discharge route linked up to the opening V1o from the micro space X3 through the conduit portion V1C have been formed, and passage of a liquid through other conduit portions H1a, H2b, H2c, V2B and V2C has been prohibited.

In this liquid processor, a liquid medium is caused to flow in from the opening V1i and fed to the micro spaces X2 and X3, a first test liquid is caused to flow in from the opening V2i and fed to the micro space X2, a second test liquid different from the first test liquid in a cell stimulator contained is caused to flow in from the opening H2i and fed to the micro space X3, and the respective liquids from the micro spaces X2 and X3 are discharged to the outside through the first and second liquid discharge routes, thereby conducting inspections of cell reactions.

In this embodiment, the first and second test liquids may be those containing the same cell stimulator at different concentrations.

As the micro spaces, in which the cells are placed, may be suitably selected a plurality of micro spaces that do not adjoin each other and are linked up to each other through the same empty micro space. An independent liquid running route linked up to each of the micro spaces, in which the cells are placed, can be thereby formed with a great degree of freedom.

According to the inspection method of the cell reactions as described above, a plurality of cell reactions, in which the liquid medium is fed to a plurality of micro spaces, which are cell reaction sites, from a common feed source through a plurality of liquid running routes formed by controlling the opened and closed states of the valves in the same inspection apparatus for cell reaction, and different test liquids are respectively fed through independent test liquid feeding routes, can be conducted simultaneously and easily, so that inspections of cell reactions, in which the results of the reactions of the same kinds of cells with the different test liquids are detected, can be conducted simultaneously in parallel with each other under reaction conditions set with a great degree of freedom according to various objects. After all, evaluation as to various test liquids and cells can be made with high efficiency.

In addition, since the inspections of the cell reactions can be conducted on an extremely small scale by constructing the inspection apparatus for cell reaction as a micro reactor, the cell reactions can be conducted in a short period of time. Accordingly, the results as to the inspections of the cell reactions can be obtained with high efficiency.

### <Simultaneously Progressive Example (2) of Multiple Reactions>

This embodiment is an example that different kinds of cells are placed in a plurality of micro spaces, and a specific test liquid is fed to the respect micro spaces to conduct inspections of cell reactions.

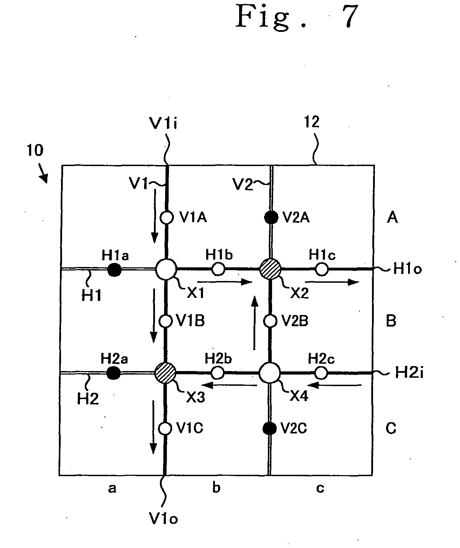

Fig. 7 illustrates a further specific example of a liquid processor in the inspection method of the cell reaction according to the present invention.

More specifically, in the device 10, different kinds of cells are placed in the micro spaces X2 and X3, conditioning of the cells is conducted by a suitable mode, and the opened and closed states of the valves are then controlled, thereby providing a liquid processor in which the valves H1a, H2a, V2A and V2C are set to a closed state, and other valves than these valves are set to an opened state as illustrated in Fig. 7.

In this liquid processor, is realized a state that a first liquid medium feeding route linked up to the micro space X2 from the opening V1i through the conduit portion V1A, the micro space X1 and the conduit portion H1b, a second liquid medium feeding route branched at the micro space X1 from this first liquid medium feeding route and linked up to the micro space X3 through the conduit portion V1B, a first test liquid feeding route linked up to the micro space X2 from the opening H2i through the conduit portion H2c, the micro space X4 and V2B, a second test liquid feeding route branched at the micro space X4 from the first test liquid feeding route and linked up to the micro space X3 through the conduit portion H2b, a first liquid discharge route linked up to the opening H1o from the micro space X2 through the conduit portion H1c, and a second liquid discharge route linked up to the opening V1o from the micro space X3 through the conduit portion V1C have been formed, and passage of a liquid through other conduit portions H1a, H2a, V2A and V2C has been prohibited.

In this liquid processor, a liquid medium is caused to flow in from the opening V1i and fed to the micro spaces X2 and X3, a test liquid is caused to flow in from the opening H2i and fed to each of the micro spaces X2 and X3, and the respective liquids from the micro spaces X2 and X3 are discharged to the outside through the first and second liquid discharge routes, thereby conducting inspections of cell reactions.

According to the inspection method of the cell reactions as described above, a plurality of cell reactions in which the liquid medium is fed to each of a plurality of micro spaces from a common feed source through a plurality of liquid running routes formed by controlling the opened and closed states of the valves in the same inspection apparatus for cell reaction, and a test liquid is fed from a common feed source, can be conducted simultaneously and easily, so that even when the results of the reactions of the different kinds of cells to the specific test liquid are detected, a plurality of inspections of cell reactions as to the respective cells can be conducted simultaneously in parallel with each other under reaction conditions set with a great degree of freedom according to various objects. After all, evaluation as to the specific test liquid and the different kinds of cells can be made with ease and high efficiency.

In addition, since the inspections of the cell reactions can be conducted on an extremely small scale by constructing the inspection apparatus for cell reaction as a micro reactor, the cell reactions can be conducted in a short period of time. Accordingly, the results as to the inspections of the cell reactions can be obtained with high efficiency.

### <Successive Reaction Example (single cell)>

This embodiment is an example that a first test liquid is fed to cells placed in a selected micro space, the feed of the first test liquid is then stopped, and a second test liquid is fed through a feeding route different from the feeding route of the first test liquid to conduct inspections of cell reactions.

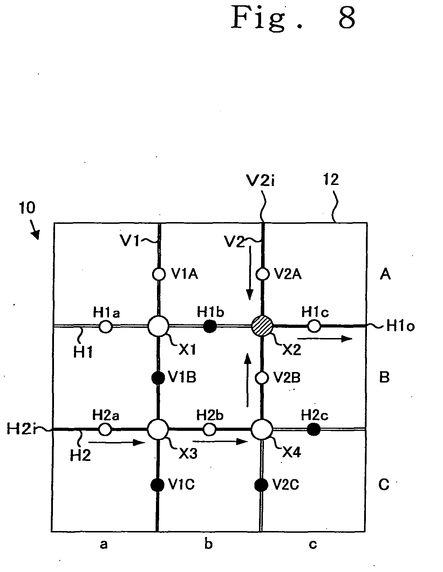

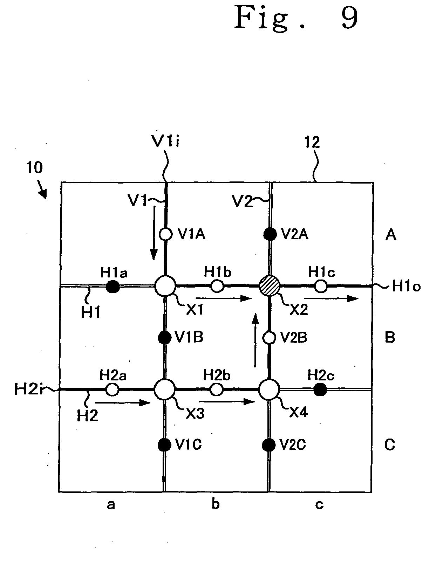

Fig. 8 illustrates a still further specific example of a liquid processor in the inspection method of the cell reaction according to the present invention, and Fig. 9 illustrates a specific example that the opened and closed states have been controlled and changed over in the liquid processor shown in Fig. 8.

More specifically, in the device 10, cells are placed in the micro space X2, conditioning of the cells is conducted by a suitable mode, and the opened and closed states of the valves are then controlled, thereby providing a first liquid processor in which the valves H1b, H2c, V1B, V1C and V2C are set to a closed state, and other valves than these valves are set to an opened state as illustrated in Fig. 8.

In this first liquid processor, is realized a state that a liquid medium feeding route linked up to the micro space X2 from the opening H2i through the conduit portion H2a, the micro space X3, the conduit portion H2b, the micro space X4 and the conduit portion V2B, a first test liquid feeding route linked up to the micro space X2 from the opening V2i through the conduit portion V2A, and a liquid discharge route linked up to the opening H1o from the micro space X2 through the conduit portion H1c have been formed, and passage of a liquid through other conduit portions H1a, H1b, H2c, V1A, V1B, V1C and V2C has been prohibited.

In this state, a liquid medium is caused to flow in from the opening H2i and fed to the micro space X2, a first test liquid is caused to flow in from the opening V2i and fed to the micro space X2, and the liquid from the micro space X2 is discharged to the outside through the liquid discharge route, thereby conducting a first test process.

After completion of the first test process, the opened and closed states of the valves are controlled and changed over, thereby providing a second liquid processor in which the valves H1a, H2c, V1B, V1C, V2A and V2C are set to a closed state, and other valves than these valves are set to an opened state as illustrated in Fig. 9.

In this second liquid processor, is realized a state that the liquid medium feeding route described above, a second test liquid feeding route linked up to the micro space X2 from the opening V1i through the conduit portion V1A, the micro space X1 and the conduit portion H1b, and the liquid discharge route described above have been formed and passage of a liquid through other conduit portions H1a, H2c, V1B, V1C, V2A and V2C has been prohibited.

In this second liquid processor, the liquid medium is caused to flow in from the opening H2i and fed to the micro space X2, a second test liquid is caused to flow in from the opening V1i and fed to the micro space X2, and the liquid from the micro space X2 is discharged to the outside through the liquid discharge route, thereby conducting a second test process to conduct inspections of cell reactions.

In this embodiment, the first and second test liquid are test liquid different from each other and may respectively contain different kinds of cell stimulators or contain the same kind of cell stimulator at different concentrations.

According to the inspection method of the cell reactions as described above, cell reactions, in which the test liquids different from each other are successively fed to the single cells through proper liquid running routes formed by controlling the opened and closed states of the valves in the same inspection apparatus for cell reaction, can be easily conducted, so that even when the results of the successive reactions of the cells to the different test liquids are detected, inspections of cell reactions including a plurality of test processes of the different test liquids can be successively conducted under reaction conditions set with a great degree of freedom according to various objects. After all, evaluation as to the different test liquids and the cells can be easily made with high efficiency.

In addition, since the inspections of the cell reactions can be conducted on an extremely small scale by constructing the inspection apparatus for cell reaction as a micro reactor, the cell reactions can be conducted in a short period of time. Accordingly, the results as to the inspections of the cell reactions can be obtained with high efficiency.

### <Successive Reaction Example (multiple cells)>

This embodiment is an example that cells are placed in a plurality of micro spaces, and a cell reaction product produced by a cell reaction in the first cells is fed to the second cells to conduct inspections of cell reactions.

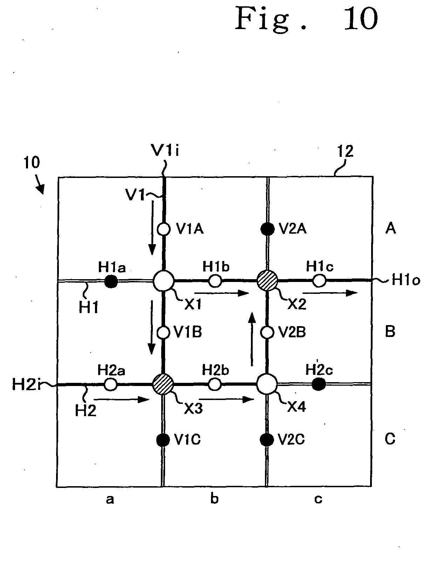

Fig. 10 illustrates a specific example of a liquid processor in such an inspection method of the cell reactions.

In this embodiment, in the device 10, the same kind or different kinds of cells are respectively placed in the micro spaces X2 and X3, conditioning of the cells is conducted by a suitable mode, and the opened and closed states of the valves are then controlled, thereby providing a liquid processor in which the valves H1a, H2c, V1C, V2A and V2C are set to a closed state, and other valves than these valves are set to an opened state as illustrated in Fig. 10.

In this liquid processor, is realized a state that a first liquid medium feeding route linked up to the micro space X2 from the opening V1i through the conduit portion V1A, the micro space X1 and the conduit portion H1b, a second liquid medium feeding route branched at the micro space X1 from this first liquid medium feeding route and linked up to the micro space X3 through the conduit portion V1B, a first test liquid feeding route linked up to the micro space X3 from the opening H2i through the conduit portion H2a, a second test liquid feeding route linked up to the micro space X2 from the micro space X3 through the conduit portion H2b, the micro space X4 and the conduit portion V2B, and a liquid discharge route linked up to the opening H1o from the micro space X2 through the conduit portion H1c have been formed, and passage of a liquid through other conduit portions H1a, H2c, V1C, V2A and V2C has been prohibited.

In this liquid processor, a liquid medium is caused to flow in from the opening V1i and fed to the micro spaces X2 and X3, a test liquid is caused to flow in from the opening H2i and fed to the micro space X3, and a liquid containing a cell reaction product by the first cells, for example, cytokine, albumin, glucagons, insulin or the like, from the micro space X3 is fed to the micro space X2, in which the second cells have been placed, and a liquid from the micro space X2 is discharged to the outside through the liquid discharge route, thereby conducting inspections of cell reactions.

According to the inspection method of the cell reactions as described above, successive cell reactions using a plurality of cells, in which the liquid medium is fed to a plurality of micro spaces from a common feed source through a plurality of liquid running routes formed by controlling the opened and closed states of the valves in the same inspection apparatus for cell reaction, and the liquid from one micro space, in which the first cells have been placed, and the test liquid has been fed, is fed to the other micro space, can be easily conducted, so that even when the mutual biochemical relationship between a plurality of different cells is detected, inspections of cell reactions as to the respective cells can be conducted under reaction conditions set with a great degree of freedom according to various objects. After all, various evaluations as to, for example, a test liquid, a plurality of cells and correlation between such cells can be easily made with high efficiency.

In addition, since the inspections of the cell reactions can be conducted on an extremely small scale by constructing the inspection apparatus for cell reaction as a micro reactor, the cell reactions can be conducted in a short period of time. Accordingly, the results as to the inspections of the cell reactions can be obtained with high efficiency.

The construction of the above-described inspection apparatus for cell reaction utilized for conducting the inspection method of cell reactions is not limited to the above-described embodiments, and various modifications may be added.

For example, the inspection apparatus for cell reactions may be constructed by a liquid processor compound body with a plurality of liquid processors combined. In this case, the liquid processor compound body may be formed by arranging a plurality of liquid processors in parallel along the same plane or stacking them on each other.

When lateral micro conduits and vertical micro conduits are formed in the base material making up the device for liquid processor, it is not essential that the numbers thereof are 2, and the numbers may be 3 or more. It is also not essential that the number of lateral micro conduits and the number of vertical micro conduits are the same. Further, it is also not essential that a crossed axes angle between the lateral micro conduit and the vertical micro conduit is 90°. They may be linked to the micro space at an acute angle or obtuse angle.

When a plurality of test liquids or liquid media are required to be mixed in advance, it is only necessary to share at least the same conduit portion or a micro space, in which no cell is placed, in the respective running routes led to a specific micro space, in which cells have been placed. For example, the common conduit portion is set longer, whereby long mixing time can be achieved.

The device for liquid processor may be so constructed that the magnetizable film is provided on the whole back surface of the base material. According to such construction, the opened and closed states of the valves can be surely controlled.

The construction of the valve may be any so far as it has a function of interrupting the passage of a liquid in the micro conduit in an operating state or non-operating state, and the specific construction thereof is not limited. For example, a valve ball having a charge and a valve control mechanism for driving this ball to move by an effect of an electric field may also be utilized.

In order to achieve setting of conditions to cause an intended reaction with high efficiency in actual use of the inspection apparatus for cell reaction according to the present invention, necessary means may be provided. For example, a heating means or any other auxiliary means may be provided in a specific conduit portion among conduit portions making up the liquid running route.

### EFFECTS OF THE INVENTION

According to the inspection apparatus for cell reaction of the present invention, in a device for liquid processor, a fluid running route to a cell reaction site required according to the kind of an inspection of a cell reaction to be conducted can be set with a great degree of freedom by selectively controlling the opened and closed states of valves related to micro conduits making up a micro conduit network. Accordingly, reaction conditions in the inspection of the cell reaction can be set with a great degree of freedom. After all, the intended cell reaction and inspection of the cell reaction can be conducted with ease and certainty.

According to the inspection method of the cell reaction of the present invention, reaction conditions can be set for living cells placed in a selected micro space with a great degree of freedom by using the above-described inspection apparatus for cell reaction, so that expected reactions in the cells can be easily conducted under a variety of different conditions, and the results by the reactions can be detected with high efficiency. Accordingly, inspections of cell reactions can be conducted by feeding various cell stimulators to a plurality of cells under the same conditions.

Since a cell reaction can be conducted on an extremely small scale, the results as to the cell reaction can be obtained in a short period of time.

## Claims

1. An inspection apparatus for cell reaction, which is composed of a device for liquid processor comprising
a plate-shaped base material;
a plurality of first micro conduits extending in a first direction and a plurality of second micro conduits extending in a second direction different from the first direction, which are formed in the base material,
micro spaces formed at respective intersections of the first micro conduits and second micro conduits,
a valve provided in each of the respective micro conduits linked to the micro spaces, for opening and closing the micro conduit, and
a valve control mechanism for controlling each of the valves between closed and opened states,
wherein the apparatus is used in an inspection of a cell reaction, in which a liquid medium necessary for survival of living cells is fed through one of micro conduits linked to a selected micro space, in which the living cells are placed, and a test liquid containing a cell stimulator is fed through another micro conduit linked to the micro space to inspect a cell reaction caused by the test liquid.

2. An inspection method of a cell reaction, which comprises using a device for liquid processor comprising
a plate-shaped base material,
a plurality of first micro conduits extending in a first direction and a plurality of second micro conduits extending in a second direction intersecting with the first direction, which are formed in the base material,
micro spaces formed at respective intersections of the first micro conduits and second micro conduits,
a valve provided in each of the respective micro conduits linked to the micro spaces, for opening and closing the micro conduit, and
a valve control mechanism for controlling each of the valves between closed and opened states,
wherein a liquid medium necessary for survival of cells is fed to a selected micro space, in which the cells are placed, through one of micro conduits linked to the micro space, and a test liquid containing a cell stimulator is fed through another micro conduit linked to the micro space, thereby inspecting a cell reaction caused.

3. The inspection method of the cell reaction according to claim 2, wherein the same kind of cells are placed in a plurality of micro spaces, and different test liquids containing a cell stimulator are fed to the plurality of the micro spaces.

4. The inspection method of the cell reaction according to claim 2, wherein different kinds of cells are placed in a plurality of micro spaces, and the same test liquid containing a cell stimulator is fed to the plurality of the micro spaces.

5. An inspection method of a cell reaction, which comprises using a device for liquid processor comprising
a plate-shaped base material,
a plurality of first micro conduits extending in a first direction and a plurality of second micro conduits extending in a second direction intersecting with the first direction, which are formed in the base material,
micro spaces formed at respective intersections of the first micro conduits and second micro conduits,
a valve provided in each of the respective micro conduits linked to the micro spaces, for opening and closing the micro conduit, and
a valve control mechanism for controlling each of the valves between closed and opened states,
wherein a first test process that a liquid medium necessary for survival of cells is fed to a selected micro space, in which the cells are placed, through one of micro conduits linked to the micro space, and a first test liquid containing a cell stimulator is fed through another micro conduit linked to the micro space, and
a second test process that the opened and closed states of the valves of the micro conduits linked to the micro space are changed over after the first test process, thereby stopping the feed of the first test liquid and feeding a second test liquid different from the first test liquid, containing a cell stimulator through a feeding route different from the feeding route for the first test liquid are conducted, thereby inspecting cell reactions caused by these test processes.

6. The inspection method of the cell reaction according to claim 5, wherein the first and second test liquids contain cell stimulators different in kind or concentration from each other.

7. The inspection method of the cell reaction according to claim 5 or 6, wherein the cells placed in the micro space are cells derived from an internal organ or organ of an animal, and the cell stimulators contained in the first and second test liquids are selected from cell growth factors, cell proliferation factors, hormones, nutrients and sera.

8. The inspection method of the cell reaction according to any one of claims 2 to 7, wherein the inspection of the cell reaction is detection of a productive substance produced by the cells.

9. An inspection method of a cell reaction, which comprises using a device for liquid processor comprising
a plate-shaped base material,
a plurality of first micro conduits extending in a first direction and a plurality of second micro conduits extending in a second direction intersecting with the first direction, which are formed in the base material,
micro spaces formed at respective intersections of the first micro conduits and second micro conduits,
a valve provided in each of the respective micro conduits linked to the micro spaces, for and opening and closing the micro conduit, and
a valve control mechanism for controlling each of the valves between closed and opened states,
wherein in an inspection of a cell reaction that a liquid medium necessary for survival of cells is fed to a plurality of selected micro spaces, in each of which the cells are placed, through one of micro conduits respectively linked to the plurality of the micro spaces, and a test liquid containing a cell stimulator is fed through another micro conduits respectively linked to the plurality of the micro spaces,
a cell reaction product by the first cells is fed to the second cells.
